# EUROPEAN PATENT SPECIFICATION

(11) **EP 1 612 693 B1**
(45) Date of publication and mention of the grant of the patent: **08.08.2007**
(21) Application number: 05250139.2
(22) Date of filing: 13.01.2005
(51) Int. Cl.: G06F 15/78, H03K 19/177

(54) **Reconfigurable processor and semiconductor device**
Rekonfigurierbarer Prozessor und Halbleiterbaustein
Processeur reconfigurable et dispositif semi-conducteur

(30) Priority: 28.06.2004 JP 2004189503
(43) Date of publication of application: 04.01.2006
(73) Proprietor: FUJITSU LIMITED, Kawasaki-shi, Kanagawa 211-8588 (JP)
(72) Inventor: Kasama, Ichiro, c/o Fujitsu Limited, Kawasaki-shi Kanagawa 211-8588 (JP)
(74) Representative: Stebbing, Timothy Charles

(56) References cited:
- ROLF ENZLER: "Architectural Trade-offs in Dynamically Reconfigurable Processors" SWISS FEDERAL INSTITUTE OF TECHNOLOGY. DISSERTATION ETH NO. 15423, [Online] January 2004 (2004-01), XP002348270 Zürich Retrieved from the Internet: URL:http://scholar.google.com/url?sa=U&q=h ttp://www.ife.ee.ethz.ch/~enzler/pub/phdth esis04.pdf> [retrieved on 2005-10-10]
- SUHR D: "SERIAL SCAN, DESIGN FOR TEST, JTAG... AN OVERVIEW AND INTRODUCTION" WESCON TECHNICAL PAPERS, WESTERN PERIODICALS CO. NORTH HOLLYWOOD, US, vol. 33, 1 November 1989 (1989-11-01), pages 290-293, XP000116022
- PUTTEGOWDA K, LEHN DI, PARK J H, ATHANAS P, JONES M: "Context Switching in a Run-Time Reconfigurable System" THE JOURNAL OF SUPERCOMPUTING, vol. 26, 2003, pages 239-257, XP002348271
- GUANGMING LU ET AL: "The MorphoSys dynamically reconfigurable system-on-chip" EVOLVABLE HARDWARE, 1999. PROCEEDINGS OF THE FIRST NASA/DOD WORKSHOP ON PASADENA, CA, USA 19-21 JULY 1999, LOS ALAMITOS, CA, USA,IEEE COMPUT. SOC, US, 19 July 1999 (1999-07-19), pages 152-160, XP010346235 ISBN: 0-7695-0256-3
- HEYSTERS P ET AL: "A Flexible and Energy-Efficient Coarse-Grained Reconfigurable Architecture for Mobile Systems" JOURNAL OF SUPERCOMPUTING, KLUWER, DORDRECHT, NL, vol. 26, no. 3, November 2003 (2003-11), pages 283-308, XP002346001 ISSN: 0920-8542
- SALEFSKI B ET AL: "Re-configurable computing in wireless" PROCEEDINGS OF THE 38TH. ANNUAL DESIGN AUTOMATION CONFERENCE. (DAC). LAS VEGAS, NV, JUNE 18 - 22, 2001, PROCEEDINGS OF THE DESIGN AUTOMATION CONFERENCE, NEW YORK, NY : ACM, US, vol. CONF. 38, 18 June 2001 (2001-06-18), pages 178-183, XP010552379 ISBN: 1-58113-297-2
- CARDOSO J M P: "Loop dissevering: a technique for temporally partitioning loops in dynamically reconfigurable computing platforms" PARALLEL AND DISTRIBUTED PROCESSING SYMPOSIUM, 2003. PROCEEDINGS. INTERNATIONAL APRIL 22-26, 2003, PISCATAWAY, NJ, USA,IEEE, 22 April 2003 (2003-04-22), pages 181-188, XP010645764 ISBN: 0-7695-1926-1
- SCALERA S M ET AL: "The design and implementation of a context switching FPGA" FPGAS FOR CUSTOM COMPUTING MACHINES, 1998. PROCEEDINGS. IEEE SYMPOSIUM ON NAPA VALLEY, CA, USA 15-17 APRIL 1998, LOS ALAMITOS, CA, USA,IEEE COMPUT. SOC, US, 15 April 1998 (1998-04-15), pages 78-85, XP010298158 ISBN: 0-8186-8900-5
- LING X ET AL: "WASMII: AN MPLD WITH DATA-DRIVEN CONTROL ON A VIRTUAL HARDWARE" JOURNAL OF SUPERCOMPUTING, KLUWER ACADEMIC PUBLISHERS, DORDRECHT, NL, vol. 9, no. 3, January 1995 (1995-01), pages 253-276, XP000589468 ISSN: 0920-8542
- TRIMBERGER S ET AL: "A time-multiplexed FPGA" FIELD-PROGRAMMABLE CUSTOM COMPUTING MACHINES, 1997. PROCEEDINGS., THE 5TH ANNUAL IEEE SYMPOSIUM ON NAPA VALLEY, CA, USA 16-18 APRIL 1997, LOS ALAMITOS, CA, USA,IEEE COMPUT. SOC, US, 16 April 1997 (1997-04-16), pages 22-28, XP010247464 ISBN: 0-8186-8159-4
- DEHON A: "DPGA Utilization and Application" FIELD-PROGRAMMABLE GATE ARRAYS, 1996. FPGA '96. PROCEEDINGS OF THE 1996 ACM FOURTH INTERNATIONAL SYMPOSIUM ON NAPA VALLEY, CA, USA 11-13 FEB. 1996, PISCATAWAY, NJ, USA,IEEE, 11 February 1996 (1996-02-11), pages 115-121, XP010781531 ISBN: 0-7695-2576-8
- BECKER J ET AL: "Configware and morphware going mainstream" JOURNAL OF SYSTEMS ARCHITECTURE, ELSEVIER SCIENCE PUBLISHERS BV., AMSTERDAM, NL, vol. 49, no. 4-6, September 2003 (2003-09), pages 127-142, XP004464557 ISSN: 1383-7621

## Description

This invention relates to a reconfigurable processor and semiconductor device and, more particularly, to a reconfigurable processor and semiconductor device comprising an arithmetic and logic unit group including a plurality of arithmetic and logic units and a sequencer for controlling the operation of the arithmetic and logic unit group.

A change in specification, the addition of a function, the addition of a new service, or the like may be made after shipment of products. Conventionally, reconfigurable processors have been provided to change functions without remanufacturing devices. Conventional reconfigurable processors can meet the above-mentioned situations only by replacing circuit configuration information.

For example, Digital Application Processor/Distributed Network Architecture (registered trademark) (DAP/DNA) manufactured at IP-Flex Inc. and Dynamically Reconfigurable Processor (DRP) manufactured at NEC Corporation are known as such reconfigurable processors.

The DAP/DNA includes a plurality of composite arithmetic and logic unit modules two-dimensionally arranged and a plurality of pieces of information in which a configuration in each module and connection between arithmetic and logic units are described and handles different algorithms by switching these pieces of information.

The DRP comprises a plurality of arithmetic and logic unit modules each of which includes an instruction memory, an instruction decoder, and an arithmetic and logic unit, two-dimensionally arranged. The operation of the plurality of arithmetic and logic unit modules is managed by a state transition management section. The state transition management section has a state transition table. By designating an address in an instruction memory to be executed by each arithmetic and logic unit module in accordance with the state transition table, the state transition management section selects any instruction and makes each arithmetic and logic unit module execute it.

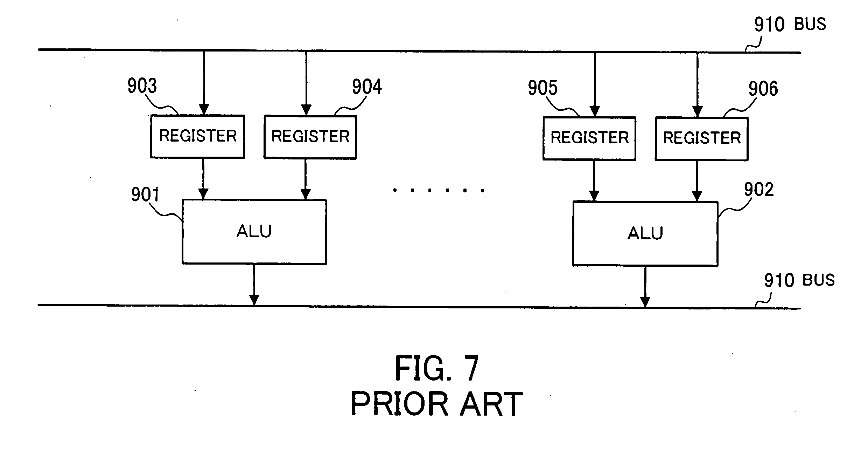

As described above, the conventional reconfigurable processors have an arithmetic and logic unit group including a plurality of arithmetic and logic units (ALUs) therein. The operation of each arithmetic and logic unit included in the arithmetic and logic unit group and connection between arithmetic and logic units can be reconfigured on the basis of setting information. A register for holding an input value is connected to each arithmetic and logic unit. Fig. 7 shows the structure of arithmetic and logic units and registers included in a conventional reconfigurable processor.

ALUs 901 and 902 included in a conventional reconfigurable processor exchange data via a bus 910 and perform predetermined operation processes. Registers 903 and 904 for holding an input value inputted via the bus 910 are fixedly connected to the ALU 901. Similarly, registers 905 and 906 for holding an input value inputted via the bus 910 are fixedly connected to the ALU 902. That is to say, the registers 903 and 904 are fixedly connected to two input ports, respectively, of the ALU 901 and the registers 905 and 906 are fixedly connected to two input ports, respectively, of the ALU 902. With the conventional reconfigurable processor, one register is fixedly connected to one input port of an ALU in this way.

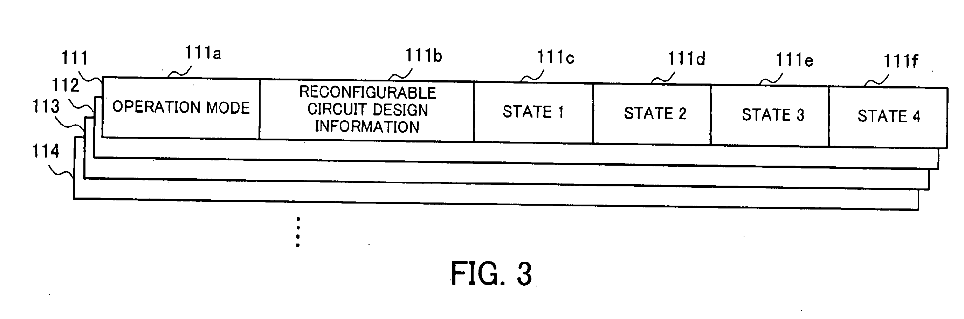

Meanwhile, a reduced instruction set computer (RISC) processor in which a plurality of sets of register files capable of being accessed from an external coprocessor are connected to an ALU is known as an example in which a plurality of registers are connected to an ALU (see, for example, Published Japanese Translations of PCT International Publication for Patent Applications No. 2002-512399, Fig. 3).

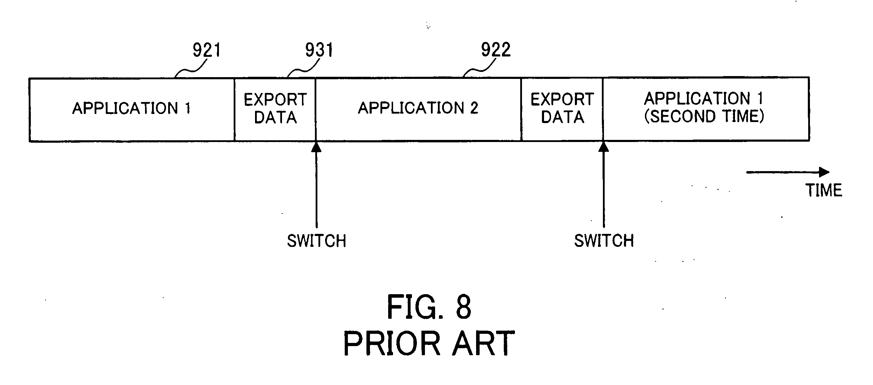

With conventional reconfigurable processors, switching the configuration of an operating arithmetic and logic unit group with the passage of time degrades the performance. Fig. 8 shows timing with which the switching of a configuration is performed in a conventional reconfigurable processor. The configuration of an arithmetic and logic unit group is switched according to the contents of processes performed by applications 1 and 2.

With the conventional reconfigurable processors, the number of registers provided for each arithmetic and logic unit is always one. Therefore, to switch a configuration for the application 1 (921) to a configuration for the application 2 (922), data generated by the application 1 (921) is outputted from a register after the termination of the application 1 (921) as a result of exporting the data (931) and then switching to the configuration for the application 2 (922) is performed. To switch the configuration for the application 2 (922) to the configuration for the application 1 (921), the same process is performed and then switching to the configuration for the application 1 (921) is performed.

As stated above, when an application is switched, extra time is necessary for exporting data. As a result, switching an application on a fine time division basis degrades the performance. Moreover, to hold a result obtained by executing the application 1 and use it at the time of executing the application 1 for the second time, data must be saved in a storage device, such as a memory. This has a great influence on the performance.

In addition, with the conventional reconfigurable processors, it is difficult to debug an arithmetic and logic unit group. In some cases, it is necessary to know the state at any time of input to and output from an arithmetic and logic unit (values of registers) for debugging. However, to take out data, the operation must be stopped completely or the state of circuits and data after a stop must be all discarded. With the conventional reconfigurable processors, however, a register is located between arithmetic and logic units, so the value of the register can be outputted to the outside only via the arithmetic and logic units. One register is connected to each arithmetic and logic unit. Accordingly, to obtain externally the value of a register at a particular instant, operations given to all of the arithmetic and logic units must be changed temporarily to no operation (NOP) to cause data to sequentially flow. In this case, data obtained by operations before the change of the operations flows. Therefore, after the data for debugging is taken out, it is impossible to resume the operations.

Meanwhile, with conventional devices in which a plurality of sets of register files are switched by performing context switching, all of the register files are simultaneously switched in block. Therefore, it is impossible to perform fine switching of individual arithmetic and logic units, arithmetic and logic unit groups or the like.

'Architectural Trade-Offs in Dynamically Reconfigurable Processors' Enzler, Swiss Federal Institute of Technology, Dissertation ETH No. 15423, January 2004, discusses the design and evaluation of dynamically reconfigurable processor architectures targeting the embedded computing domain. It discloses a reconfigurable array in which register sets are provided for an arithmetic and logical unit (ALU), such that each logical content can have its own, dedicated, register set assigned.

'Serial Scan, Design for Test, JTAG...An overview and introduction', Suhr, Wescon Technical Papers, Western Periodicals Co., North Hollywood, US, Vol. 33, 1st November 1989, pages 290-293, discusses the methodologies used to design, build and test electronic systems, including Design For Test, Built-In Self-Test and Serial Scan.

A reconfigurable processor with an arithmetic and logic unit group, including a plurality of arithmetic and logic units, and a sequencer for controlling the operation of the arithmetic and logic unit group is provided by the present invention. This reconfigurable processor also has register groups located between input ports of the plurality of arithmetic and logic units and a preceding stage from which data is inputted to the plurality of arithmetic and logic units, each including a plurality of registers for holding the data inputted from the preceding stage to the plurality of arithmetic and logic units; and selectors for selecting registers to be connected to the plurality of arithmetic and logic units from the register groups in accordance with instructions from the sequencer and for connecting the registers selected to the input ports of the plurality of arithmetic and logic units; wherein: a register included in a register group is associated with other registers which are included in other register groups within a predetermined larger group and which are selected simultaneously with the register included in the register group, and forms a set together with the selected other registers which are included in the other register groups within the predetermined larger group; and the selectors connected to the register groups within the predetermined larger group select the registers which form the set in accordance with instructions from the sequencer; characterized in that the registers included in the set are connectable in series; and the registers included in the set are connected to the preceding stage in a state in which the registers are also connected to the arithmetic and logic units by the selectors and are connected in series with one another in a state in which the registers are not connected to the arithmetic and logic units by the selectors.

In addition, a semiconductor device which has an arithmetic and logic unit group including a plurality of arithmetic and logic units and a sequencer for controlling the operation of the arithmetic and logic unit group and in which the operating state of the arithmetic and logic unit group is reconfigurable by the sequencer is provided by the present invention. This semiconductor device also has register groups located between input ports of the plurality of arithmetic and logic units and a preceding stage from which data is inputted to the plurality of arithmetic and logic units, each group including a plurality of registers for holding the data inputted from the preceding stage to the plurality of arithmetic and logic units; and selectors for selecting registers to be connected to the plurality of arithmetic and logic units from the register groups in accordance with instructions from the sequencer and for connecting the registers selected to the input ports of the plurality of arithmetic and logic units; wherein: a register included in a register group is associated with other registers which are included in other register groups within a predetermined larger group and which are selected simultaneously with the register included in the register group, and forms a set together with the selected other registers which are included in the other register groups within the predetermined larger group; and, the selectors connected to the register groups within the predetermined larger group select the registers which form the set in accordance with instructions from the sequencer; characterized in that the registers included in the set are connectable in series; and the registers included in the set are connected to the preceding stage in a state in which the registers are also connected to the arithmetic and logic units by the selectors and are connected in series with one another in a state in which the registers are not connected to the arithmetic and logic units by the selectors.

The above and other features and advantages of the present invention will become apparent from the following description when taken in conjunction with the accompanying drawings which illustrate preferred embodiments of the present invention by way of example, and in which:
Fig. 1 is a schematic view of the present invention applied to embodiments.
Fig. 2 is a block diagram showing the structure of the whole of a reconfigurable processor according to an embodiment of the present invention.
Fig. 3 shows an example of the structure of a configuration memory according to the embodiment of the present invention.
Fig. 4 shows an example of the structure of a window register section according to the embodiment.
Fig. 5 shows an example of the structure of a window according to the embodiment.
Fig. 6 is a timing chart showing an example of the switching of the window register section according to the embodiment.
Fig. 7 shows the structure of arithmetic and logic units and registers included in a conventional reconfigurable processor.
Fig. 8 shows timing with which the switching of a configuration is performed in a conventional reconfigurable processor.

A reconfigurable processor and semiconductor device embodying the invention can finely control operations without exerting an influence upon other functions at the time of switching an application on a time division basis or debugging.

An embodiment of the present invention will now be described with reference to the drawings. An overview of the present invention applied to the embodiment will be given first and then the concrete contents of the embodiment will be described.

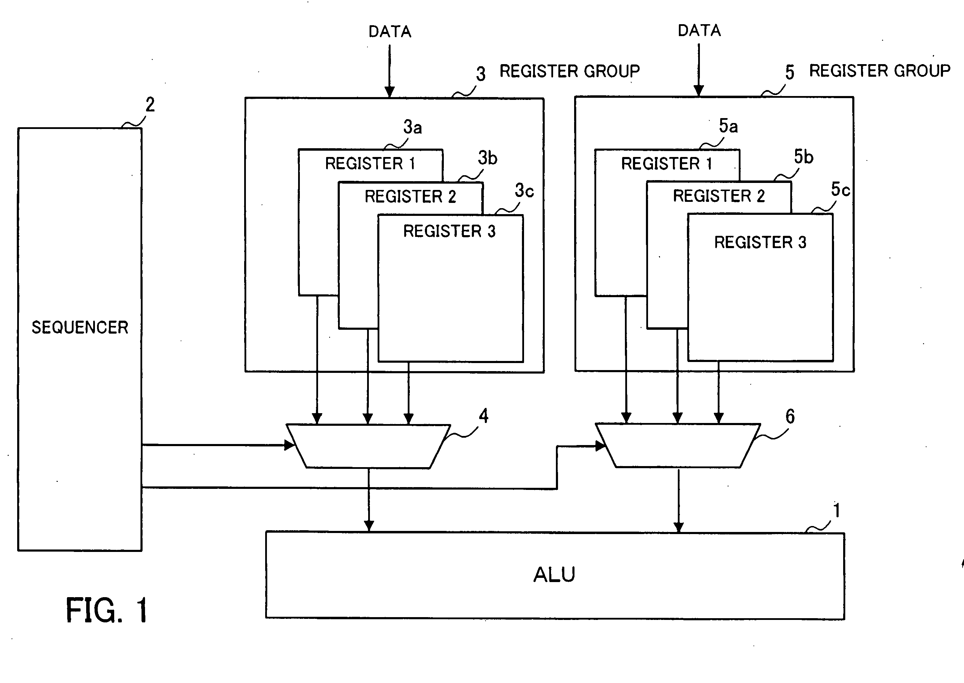

Fig. 1 is a schematic view of the present invention applied to the embodiment. A reconfigurable processor according to the embodiment of the present invention comprises an arithmetic and logic unit (ALU) group including a plurality of ALUs arranged as , for example, a matrix and a sequencer 2 for controlling the operation of the ALU group. For example, two input ports of an ALU 1 included in the ALU group are connected to register groups 3 and 5 via selectors 4 and 6, respectively.

The ALU 1 accepts data outputted from a preceding stage via the register groups 3 and 5 and the selectors 4 and 6 and performs predetermined operations, such as arithmetic operations and logic operations, under the control of the sequencer 2 . The preceding stage from which the data is outputted is, for example, another ALU connected to the ALU 1 by the sequencer 2.

The sequencer 2 holds a plurality of pieces of setting information in which the configuration of the ALU group, such as the operation of each ALU included in the ALU group and connection between ALUs, necessary for executing any application is described, and switches the state of the ALU group by switching the setting information, and executes a desired application. In addition, the sequencer 2 controls the selectors 4 and 6 according to a state selected and selects registers included in the register groups 3 and 5 which are to be connected to the ALU 1, through the selectors 4 and 6.

Each of the register groups 3 and 5 includes a plurality of registers which can operate independently of one another. The register group 3 includes a register 1 (3a), a register 2 (3b), and a register 3 (3c). The register group 5 includes a register 1 (5a), a register 2 (5b), and a register 3 (5c) . One of the registers included in the register group 3 is selected by the selector 4 and is connected to the ALU 1. Similarly, one of the registers included in the register group 5 is selected by the selector 6 and is connected to the ALU 1. The selected registers are connected between the preceding stage and the input ports of the ALU 1, hold the data outputted from the preceding stage (data inputted to the ALU 1), and output it to the ALU 1. This data is held until the next operation timing. The length of a register corresponds to the length of data inputted to the ALU 1 connected thereto. That is to say, if the length of data inputted to the ALU 1 is eight bits, then the length of a register is eight bits. If the length of data inputted to the ALU 1 is sixteen bits, then the length of a register is sixteen bits. If the length of data inputted to the ALU 1 is thirty-two bits, then the length of a register is thirty-two bits . Each register group may include any number of registers.

Under the control of the sequencer 2, the selectors 4 and 6 each select one register from the register groups 3 and 5, respectively, to which they are connected, and connect it to the ALU 1. That is to say, the selector 4 is connected to the register group 3 and connects one of the register 1 (3a), the register 2 (3b), and the register 3 (3c) to the ALU1. The selector 6 is connected to the register group 5 and connects one of the register 1 (5a), the register 2 (5b), and the register 3 (5c) to the ALU 1.

The operation of the reconfigurable processor having the above-mentioned structure will now be described.

Registers to be selected and connected to the two input ports of the ALU 1 in various states of the ALU group are registered in the setting information held by the sequencer 2. The sequencer 2 controls not only the operating state of the ALU group but also the switching of registers according to a state selected. The switching of registers performed when the state of the ALU group is switched will now be described.

The ALU group is executing an application before switching. Under the control of the sequencer 2, at this time the selectors 4 and 6 select any register from the register groups 3 and 5, respectively, and connect it to the ALU 1. For example, the register 1 (3a) included in the register group 3 and the register 1 (5a) included in the register group 5 are selected and a data flow by which the data outputted from the stage just before the ALU 1 (data inputted to the ALU 1) is inputted to the ALU 1 via the register 1 (3a) and the register 1 (5a) is formed.

When the sequencer 2 determines to switch the state of the ALU group, instructions to switch registers are issued. In accordance with the instructions issued by the sequencer 2, the selectors 4 and 6 disconnect the registers currently connected and connect designated registers to the ALU 1. For example, the register 2 (3b) included in the register group 3 and the register 2 (5b) included in the register group 5 are selected. As a result, the data outputted from the stage just before the ALU 1 is inputted to the ALU 1 via the register 2 (3b) and the register 2 (5b) and a data flow through the new registers is formed. This makes it unnecessary to export generated data after the termination of the preceding data flow. That is to say, the data flow can be switched immediately at a timing at which the application is switched. Therefore, the performance is not degraded by exporting data to memory.

When the registers are switched, the last data inputted before the switching is left in the register 1 (3a) and the register 1 (5a) . This data can be held by using latch mechanisms. This data may be taken out from the outside by forming a special data path in advance. As a result, after the data flow is switched and a predetermined process is performed, the ALU group can be brought to the pre-switching state. Moreover, taking out the data for, for example, debugging can be performed easily. In addition, to return from debugging, the original registers should be selected. Accordingly, debugging does not exert an influence upon other functions.

The embodiment of the present invention will now be described in detail with reference to the drawings.

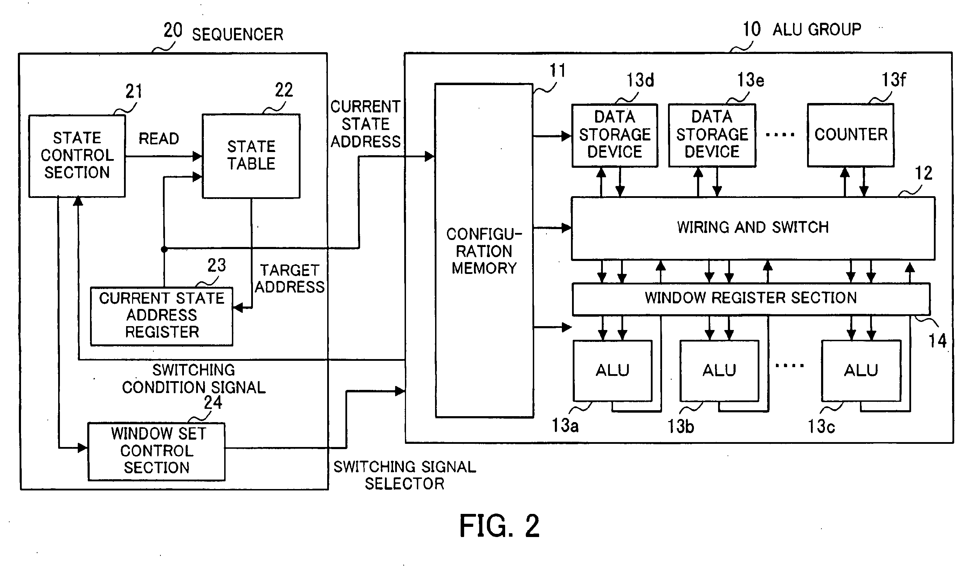

Fig. 2 is a block diagram showing the structure of the whole of a reconfigurable processor according to the embodiment of the present invention.

A reconfigurable processor comprises an ALU group 10 including a plurality of ALUs therein and a sequencer 20 for controlling the operation of each ALU module, having an ALU, included in the ALU group 10.

The ALU group 10 includes a configuration memory 11, a wiring and switch 12, ALUs 13a, 13b,..., and 13c, data storage devices 13d, 13e, and so on, a counter 13f, and a window register section 14.

The configuration memory 11 stores setting information, such as contents to be performed by each ALU module included in the ALU group 10, wiring paths between ALU modules, and data necessary for operations, for setting the operation of the ALU group 10. One piece of setting information corresponds to the "state" of one circuit configuration of the ALU group 10. A plurality of states are set in the configuration memory 11. The ALU group 10 operates in a state designated by the sequencer 20. Each ALU and the wiring and switch 12 operate in accordance with contents set in the configuration memory 11. The wiring and switch 12 includes a wiring section for making connections between ALUs in accordance with contents set in the configuration memory 11 and a switch section for switching connections in accordance with contents set in the configuration memory 11. Each of the ALUs 13a, 13b,..., and 13c performs a predetermined operation on input signals inputted via the wiring and switch 12 and the window register section 14 and outputs a result via the wiring and switch 12. Each ALU module includes the data storage devices 13d, 13e, and so on, being memories or registers, for storing data for data processing and the counter 13f. In addition, each ALU module includes an interface for exchanging data and addresses with an external unit, an address generator, and the like. The window register section 14 includes a register group made up of a plurality of registers for holding data and a connector (selector) for selecting one register from the group and connecting it to an ALU. The window register section 14 is located opposite the input ports of the ALUs included in the ALU group 10. The window register section 14 switches registers for all of the ALUs, one ALU, or a group of ALUs according to contents set in the configuration memory 11.

In Fig. 2, the window register section 14 is located between the wiring and switch 12 and the ALUs 13a, 13b,..., and 13c. However, the window register section 14 may be located in the wiring and switch 12 or the ALUs 13a, 13b,..., and 13c. In addition, the window register section 14 may be divided to locate it in the wiring and switch 12 and the ALUs 13a, 13b,..., and 13c. In Fig. 2, the configuration memory 11 is located in the ALU group 10. However, the configuration memory 11 may be located in the sequencer 20 or outside the ALU group 10 and the sequencer 20. In addition, the configuration memory 11 may be divided to locate it in the ALU group 10 and the sequencer 20.

The sequencer 20 includes a state control section 21, a state table 22, a current state address register 23, and a window set control section 24.

The state control section 21 sets a state to which the ALU group 10 next makes a transition in response to a switching condition signal inputted from the ALU group 10. This switching condition signal includes notification of the occurrence of a switching condition and a switching condition code. Addresses used in the state table 22 are the same as those used in the configuration memory 11. Each entry in the state table 22 stores an operation code indicative of behavior at the time of a transition to the next entry and the address of an entry which may be selected. The current state address register 23 stores an address (in the state table 22 and the configuration memory 11) indicative of the current state. The window set control section 24 controls a register selected by the window register section 14 according to the state set by the state control section 21.

In the above-mentioned reconfigurable processor, the ALU group 10 operates in a state which is based on setting information at a specified address in the configuration memory 11 designated by the sequencer 20. When the ALU group 10 determines that a switching condition has come into existence, the ALU group 10 sends a switching condition code and a switching condition signal to the sequencer 20. In the sequencer 20, the state control section 21 is started by the switching condition signal, a state to which the ALU group 10 next makes a transition is determined from the switching condition code and an entry in the state table 22, an address (target address) at which setting information indicative of the state is registered is calculated, and the calculated target address is set in the current state address register 23, the state table 22, and the configuration memory 11. As a result, the specified address in the configuration memory 11 is changed to the target address and the ALU group 10 makes a transition to the state. At this time the window set control section 24 issues instructions to switch registers and designates registers to be selected according to the state set by the state control section 21. These instructions are issued to switch all of the registers included in the window register section 14, registers corresponding to each group of ALUs set in advance, or a register corresponding to each ALU as occasion demands.

The configuration memory 11 will now be described. A data flow in the ALU group 10 and registers to be used for executing an application are described in the configuration memory 11. Fig. 3 shows an example of the structure of the configuration memory according to the embodiment of the present invention.

The configuration memory 11 stores configuration data which determines the operation of the ALU group 10 in each state. In this example, configuration data 111, 112, 113, 114, and so on are stored according to states. Each state (configuration, arrangement) is managed by an address.

An operation mode 111a, reconfigurable circuit design information 111b, a state 1 (111c), a state 2 (111d), a state 3 (111e), and a state 4 (111f) are stored for each state. The operation mode 111a is information for identifying this state. The reconfigurable circuit design information 111b is design information indicative of the operation of each ALU in a reconfigurable circuit and connections between ALUs in this operationmode. When the design information is generated, using specific registers, a specific data flow is determined automatically and uniquely. Candidates for the next state of this circuit configuration are described as the state 1 (111c), the state 2 (111d), the state 3 (111e), and the state 4 (111f). Actually, addresses in the configuration memory 11 are directly described or data from which these addresses can be generated directly by performing operations is described. Each candidate state is associated with a switching condition. When a switching condition comes into existence, the process for making the transition to the corresponding state is performed. In this case, the operation of each ALU, connections between ALUs, and registers connected to each ALU are set in accordance with information stored in the configuration memory 11. The number of states registered as candidates can be selected arbitrarily.

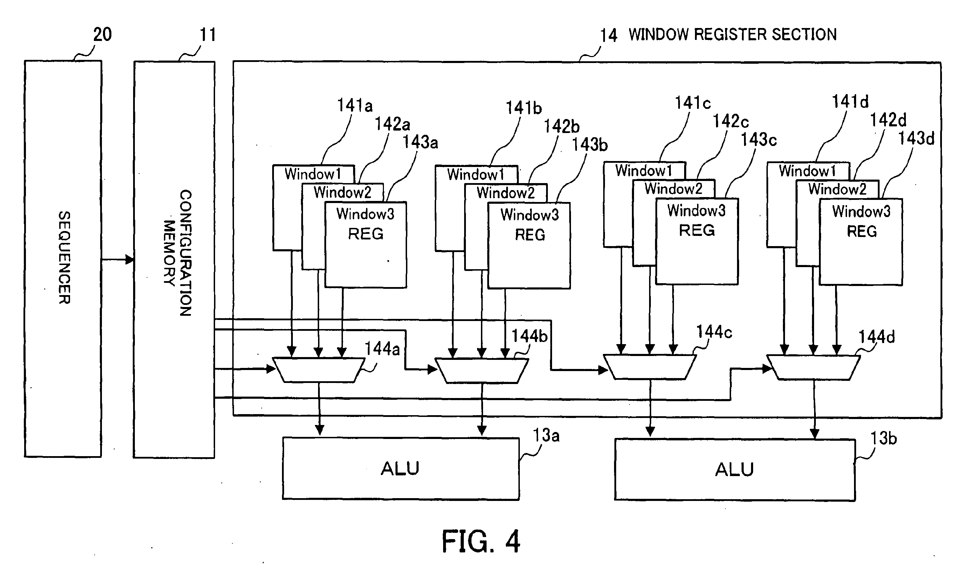

The structure of the window register section 14 will now be described. Fig. 4 shows an example of the structure of the window register section according to the embodiment. The same components in Fig. 4 that are shown in Fig. 2 are marked with the same numbers and descriptions of them will be omitted.

In the window register section 14, a plurality of register groups and selectors for selecting one register from each register group and connecting it to an ALU are located for the ALUs 13a and 13b. In this example, each of the ALUs 13a and 13b has two input ports. A register group and a selector are connected to each of these ports. That is to say, a register group including Window 1 (141a), Window 2 (142a), and Window 3 (143a) and a selector 144a are connected to a first input port of the ALU 13a. A register group including Window 1 (141b), Window 2 (142b), and Window 3 (143b) and a selector 144b are connected to a second input port of the ALU 13a. A register group including Window 1 (141c), Window 2 (142c), and Window 3 (143c) and a selector 144c are connected to a first input port of the ALU 13b. A register group including Window 1 (141d), Window 2 (142d), and Window 3 (143d) and a selector 144d are connected to a second input port of the ALU 13b.

Registers in these register groups which are selected at the same time form a set. For example, if Window 1 (141a), Window 1 (141b), Window 1 (141c), and Window 1 (141d) are selected for executing an application, then these windows form a set. Similarly, Window 2 (142a), Window 2 (142b), Window 2 (142c), and Window 2 (142d) form a set and Window 3 (143a), Window 3 (143b), Window 3 (143c), and Window 3 (143d) form a set. Windows in these register groups which form a set are selected arbitrarily. Windows which form a set are connected in series. Hereinafter, a path formed by connecting registers which form a set in series is referred to as a dummy path. By forming a dummy path in advance by connecting registers included in the same set in series, not only can predetermined data be sent according to a data flow described in the configuration memory 11, but data stored in a register not selected as the data flow can be sent via the dummy path.

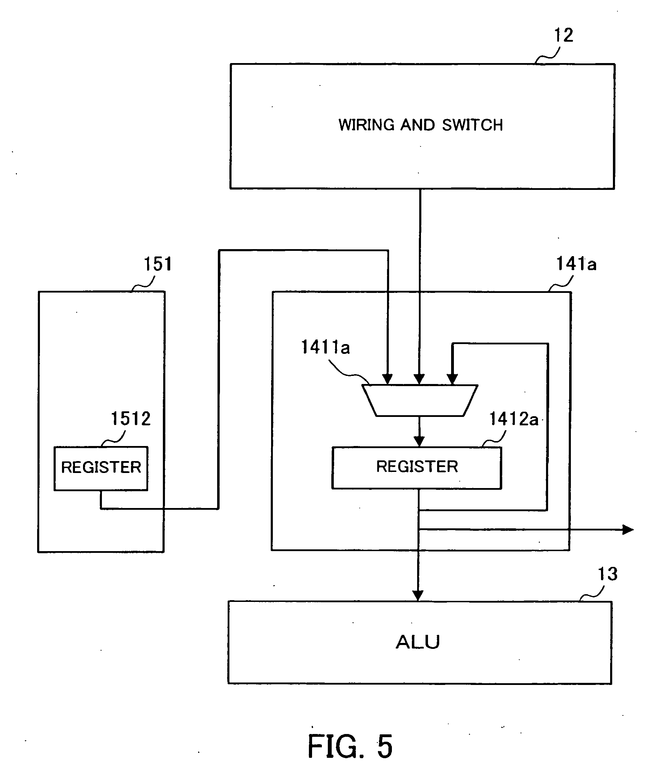

The detailed structure of each window included in the window register section 14 will now be described. Fig. 5 shows an example of the structure of a window according to the embodiment. Fig. 5 shows one of the windows included in the window register section.

Window 1 (141a) includes a switch 1411a for switching input and a register 1412a. A total of three signal lines, that is to say, a signal line from a register 1512 in Window 151 connected to a near ALU, a signal line from the wiring and switch 12, and a signal line connected to the output side of the register 1412a are connected to the input side of the switch 1411a. The register 1512 and the register 1412a connected to each other are included in the same set.

The switch 1411a selects an input to connect to according to the state of connection between Window 1 (141a) and an ALU 13. For example, when Window 1 (141a) is connected to the ALU 13 by a selector and is in an active state, the input side of the switch 1411a is connected to the wiring and switch 12. By doing so, data inputted via the wiring and switch 12 can be outputted to the ALU 13 and be saved in the register 1412a. When Window 1 (141a) is disconnected from the ALU 13 and goes into an inactive state, the input side of the switch 1411a is connected to the output side of the register 1412a. By doing so, data inputted last while Window 1 (141a) was in an active state is held in Window 1 (141a) . When Window 1 (141a) is in an inactive state, the input side of the switch 1411a can be connected to the output side of the register 1512. The register 1512 and the register 1412a are included in the same set and are connected in series. The input side of the switch 1411a is connected to the output side of the register 1512 when a specific condition comes into existence, such as when instructions to debug are given by a sequencer or a debugging block which controls debugging. By doing so, the data held in Window 1 (141a) in an inactive state can be outputted to the outside via a dummy path formed by connecting the register 1512 and the register 1412a in series.

The structure of Window 2 and Window 3 is the same as that of Window 1 (141a).

The operation of the window register section 14 having the above-mentioned structure will now be described.

For example, configuration data is set in advance in the configuration memory 11 so that the register Window 1 will be used for executing an application 1 and so that the register Window 2 will be used for executing an application 2. Each time a predetermined condition comes into existence, switching is performed and the applications 1 and 2 are executed alternately.

First, the application 1 is executed and the selectors 144a, 144b, 144c, and 144d in the window register section 14 select the registers Window 1 (141a), Window 1 (141b), Window 1 (141c), and Window 1 (141d) respectively. When the application 1 is executed, Window 1 is incorporated into a data flow in this way and a process is performed.

If a switching condition comes into existence while the application 1 is being executed, the sequencer 20 switches address designation in the configuration memory 11 to the application 2 and changes the configuration of an ALU group to execute the application 2. At this time the selectors 144a, 144b, 144c, and 144d are given instructions via the configuration memory 11 or directly from the sequencer 20, to disconnect the registers Window 1 (141a), Window 1 (141b), Window 1 (141c), and Window 1 (141d), respectively, and connect the registers Window 2 (142a), Window 2 (142b), Window 2 (142c), and Window 2 (142d), respectively, to the ALUs 13a and 13b. Each of the registers Window 1 (141a), Window 1 (141b), Window 1 (141c), and Window 1 (141d) disconnected goes into an inactive state, makes the transition to latch mode in which it inputs its output, and holds data last inputted while the application 1 was being executed.

Next, a switching condition comes into existence while the application 2 is being executed, and switching is performed from the application 2 to the application 1. At this time the registers Window 2 (142a), Window 2 (142b), Window 2 (142c), and Window 2 (142d) are disconnected and the registers Window 1 (141a), Window 1 (141b), Window 1 (141c), and Window 1 (141d) are connected to the ALUs 13a and 13b. This is the reversal of the operation performed for switching the application 1 to the application 2. Each of the registers Window 1 (141a), Window 1 (141b), Window 1 (141c), and Window 1 (141d) which goes into an active state again holds the data last inputted while the application 1 was being executed and can use it as occasion demands. Each of the registers Window 2 (142a), Window 2 (142b), Window 2 (142c), and Window 2 (142d) enters the latch mode. This is the same with the above switching from the application 1 to the application 2. Therefore, when the application 1 is switched again to the application 2, data held in the registers Window 2 (142a), Window 2 (142b), Window 2 (142c), and Window 2 (142d) can be used.

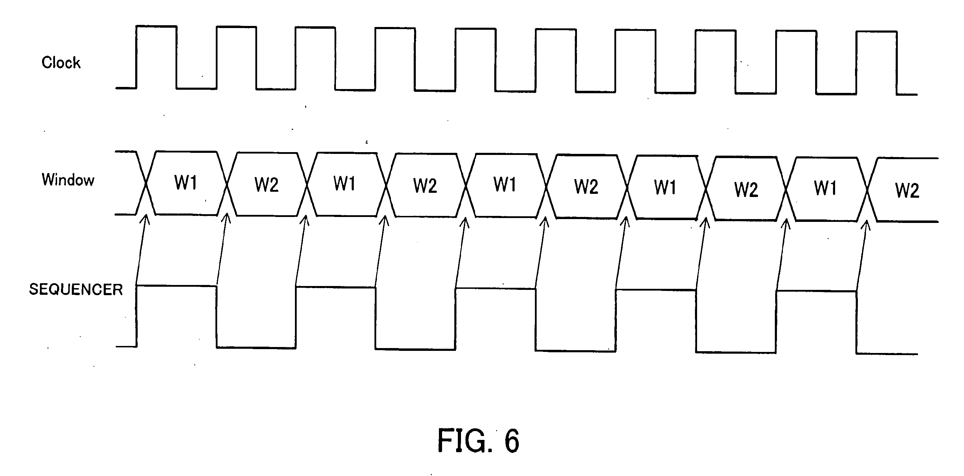

The above-mentioned switching operation will now be described by using a timing chart. Fig. 6 is a timing chart showing an example of the switching of the window register section according to the embodiment. In this example, the switching between the application 1 (the registers Window 1 (141a), Window 1 (141b), Window 1 (141c), and Window 1 (141d) are used) and the application 2 (the registers Window 2 (142a), Window 2 (142b), Window 2 (142c), and Window 2 (142d) are used) is performed cyclically.

As described above, the sequencer can issue instructions to switch registers at the same time that the sequencer switches an application (the state of the ALU group) . In this case, there is no need to perform the process of temporarily saving data. In Fig. 6, when the processing of one sequence block is begun, registers are switched, Window 1 (W1) is selected, and the application 1 is executed at once. Similarly, at the beginning of the next sequence block, Window 2 (W2) is selected and the application 2 is executed at once. As stated above, a plurality of data flows appear in turn at each switching timing and the applications can be executed at high speeds.

In the above examples, switching is performed between the registers Window 1 and the registers Window 2. However, the registers Window 3, for example, may be used. As with the above examples, an application can be switched easily by switching registers.

In the above examples, all of the registers which form a set are switched. However, several register groups may be generated for each ALU, depending on applications, and register switching may be controlled by the register group. Register groups may be generated for one ALU.

To perform, for example, debugging, data can be transferred by using a dummy path formed by connecting registers included in the same set in series. This dummy path is different from a data flow which is based on the configuration memory 11.

In the present invention, the plurality of registers for holding data inputted to the ALUs are provided and registers are selected in accordance with instructions from the sequencer. As a result, registers used can be switched dynamically according to the operating state of the sequencer. That is to say, the switching from registers used for a data flow in an operating state to registers tobe used after the operating state is switched is performed dynamically in accordance with, for example, instructions from the sequencer to switch the operating state. As a result, data in the preceding data flow can be held and a data flow can be changed immediately. Moreover, the register groups and the selectors can be operated according to the ALUs, any specific data path on a data flow can be changed dynamically, and data on the data path before the change can be held. Operation can be controlled finely in this way without exerting an influence upon other functions.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications which fall within the scope of the appended claims are included.

## Claims

1. A reconfigurable processor comprising an arithmetic and logic unit group (10), including a plurality of arithmetic and logic units (13a, 13b, 13c), and a sequencer (20) for controlling the operation of the arithmetic and logic unit group, the processor further comprising:
register groups (REG) located between input ports of the plurality of arithmetic and logic units (13a, 13b, 13c) and a preceding stage from which data is inputted to the plurality of arithmetic and logic units, each register group including a plurality of registers (141a, 142a, 143a;... 141d, 142d, 143d) for storing the data inputted from the preceding stage to the plurality of arithmetic and logic units(13a, 13b, 13c); and
selectors(144a, 144b, 144c, 144d) for selecting registers to be connected to the plurality of arithmetic and logic units(13a, 13b, 13c) from the register groups (REG) in accordance with instructions from the sequencer (20) and for connecting the registers selected to the input ports of the plurality of arithmetic and logic units; wherein:
a register (Windows 1, 141a) included in a register group (REG)is associated with other registers (141b, 141c, 141d) which are included in other register groups within a predetermined larger group and which are selected simultaneously with the register included in the register group, and forms a set together with the selected other registers which are included in the other register groups within the predetermined larger group; and
the selectors (144a, 144b, 144c, 144d) connected to the register groups within the predetermined larger group select the registers which form the set in accordance with instructions from the sequencer (20); **characterized in that**
the registers (141a, 141b, 141c, 141d) included in the set are connectable in series; and
the registers included in the set are connected to the preceding stage in a state in which the registers are also connected to the arithmetic and logic units (13a, 13b, 13c) by the selectors (144a, 144b, 144c, 144d) and are connected in series with one another in a state in which the registers are not connected to the arithmetic and logic units by the selectors.

2. The reconfigurable processor according to claim 1, wherein :
registers (141a...d; 142a...d; 143a...d) to be selected from the register group (REG) are determined in advance according to setting information in which a state of the arithmetic and logic unit group (10) for executing any application is described; and
the selectors (144a, 144b, 144c, 144d) select the registers according to the switching of a state of the arithmetic and logic unit group (10) set by the sequencer (20) .

3. The reconfigurable processor according to claim 1 or 2, wherein:
the predetermined larger group includes all of the register groups (REG) such that the set includes selected registers from all of the register groups; and
all of the selectors (144a, 144b, 144c, 144d) select the registers which form the set in accordance with instructions from the sequencer (20).

4. The reconfigurable processor according to any preceding claim, wherein each register (141a...d; 142a...d; 143a...d) included in the register groups (REG) selects output from itself as its input in a state in which the register is not connected to an arithmetic and logic unit (13a, 13b, 13c) by a selector (144a, 144b, 144c, 144d).

5. The reconfigurable processor according to any preceding claim, wherein the length of each register (141a...d; 142a...d; 143a...d) included in the register groups (REG) corresponds to the length of data inputted to each of the plurality of arithmetic and logic units (13a, 13b, 13c) connected to the register groups.

6. A semiconductor device comprising an arithmetic and logic unit group (10), including a plurality of arithmetic and logic units (13a, 13b, 13c), and a sequencer (20) for controlling the operation of the arithmetic and logic unit group, the operating state of the arithmetic and logic unit group being reconfigurable by the sequencer, the device further comprising:
register groups (REG) located between input ports of the plurality of arithmetic and logic units (13a, 13b, 13c) and a preceding stage from which data is inputted to the plurality of arithmetic and logic units, each register group (REG) including a plurality of registers (141a, 142a, 143a) for storing the data inputted from the preceding stage to the plurality of arithmetic and logic units; and
selectors (144a, 144b, 144c, 144d) for selecting registers to be connected to the plurality of arithmetic and logic units (13a, 13b, 13c) from the register groups (REG) in accordance with instructions from the sequencer (20) and for connecting the registers selected to the input ports of the plurality of arithmetic and logic units; wherein:
a register (Window 1, 141a) included in a register group (REG)is associated with other registers (141b, 141c, 141d) which are included in other register groups within a predetermined larger group and which are selected simultaneously with the register included in the register group, and forms a set together with the selected other registers which are included in the other register groups within the predetermined larger group; and
the selectors (144a, 144b, 144c, 144d) connected to the register groups within the predetermined larger group select the registers which form the set in accordance with instructions from the sequencer (20); **characterized in that**
the registers (141a, 141b, 141c, 141d) included in the set are connectable in series; and
the registers included in the set are connected to the preceding stage in a state in which the registers are also connected to the arithmetic and logic units (13a, 13b, 13c) by the selectors (144a, 144b, 144c, 144d) and are connected in series with one another in a state in which the registers are not connected to the arithmetic and logic units by the selectors.

## Patentansprüche

1. Rekonfigurierbarer Prozessor mit einer Arithmetik- und Logikeinheitsgruppe (10), die eine Vielzahl von Arithmetik- und Logikeinheiten (13a, 13b, 13c) enthält, und einem Sequenzer (20) zum Steuern der Operation der Arithmetik- und Logikeinheitsgruppe, welcher Prozessor ferner umfasst:
Registergruppen (REG), die zwischen Eingangsports der Vielzahl von Arithmetik- und Logikeinheiten (13a, 13b, 13c) und einer vorhergehenden Stufe angeordnet sind, von welcher der Vielzahl von Arithmetik- und Logikeinheiten Daten eingegeben werden, wobei jede Registergruppe eine Vielzahl von Registern (141a, 142a, 143a;... 141d, 142d, 143d) zum Speichern der Daten enthält, die von der vorhergehenden Stufe der Vielzahl von Arithmetik- und Logikeinheiten (13a, 13b, 13c) eingegeben werden; und
Selektoren (144a, 144b, 144c, 144d) zum Selektieren von Registern, die mit der Vielzahl von Arithmetik- und Logikeinheiten (13a, 13b, 13c) zu verbinden sind, von den Registergruppen (REG) gemäß Instruktionen von dem Sequenzer (20) und zum Verbinden der selektierten Register mit den Eingangsports der Vielzahl von Arithmetik- und Logikeinheiten; bei dem:
ein Register (Fenster 1, 141a), das in einer Registergruppe (REG) enthalten ist, anderen Registern (141b, 141c, 141d) zugeordnet ist, die in anderen Registergruppen innerhalb einer vorbestimmten größeren Gruppe enthalten sind und die gleichzeitig mit dem Register selektiert werden, das in der Registergruppe enthalten ist, und gemeinsam mit den selektierten anderen Registern, die in den anderen Registergruppen innerhalb der vorbestimmten größeren Gruppe enthalten sind, einen Satz bildet; und
die Selektoren (144a, 144b, 144c, 144d), die mit den Registergruppen innerhalb der vorbestimmten größeren Gruppe verbunden sind, die Register, die den Satz bilden, gemäß Instruktionen von dem Sequenzer (20) selektieren; **dadurch gekennzeichnet, dass**
die Register (141a, 141b, 141c, 141d), die in dem Satz enthalten sind, seriell verbindbar sind; und
die Register, die in dem Satz enthalten sind, mit der vorhergehenden Stufe in einem Zustand verbunden sind, wenn die Register durch die Selektoren (144a, 144b, 144c, 144d) auch mit den Arithmetik- und Logikeinheiten (13a, 13b, 13c) verbunden sind, und in einem Zustand, wenn die Register durch die Selektoren nicht mit den Arithmetik- und Logikeinheiten verbunden sind, seriell miteinander verbunden sind.

2. Rekonfigurierbarer Prozessor nach Anspruch 1, bei dem:
Register (141a...d; 142a...d; 143a...d), die von der Registergruppe (REG) zu selektieren sind, im Voraus gemäß Einstellinformationen bestimmt werden, in denen ein Zustand der Arithmetik- und Logikeinheitsgruppe (10) zum Ausführen irgendeiner Anwendung beschrieben ist; und
die Selektoren (144a, 144b, 144c, 144d) die Register gemäß dem Umschalten eines Zustandes der Arithmetik- und Logikeinheitsgruppe (10) selektieren, der durch den Sequenzer (20) eingestellt wird.

3. Rekonfigurierbarer Prozessor nach Anspruch 1 oder 2, bei dem:
die vorbestimmte größere Gruppe alle Registergruppen (REG) enthält, so dass der Satz selektierte Register von allen Registergruppen enthält; und
alle Selektoren (144a, 144b, 144c, 144d) die Register, die den Satz bilden, gemäß Instruktionen von dem Sequenzer (20) selektieren.

4. Rekonfigurierbarer Prozessor nach irgendeinem vorhergehenden Anspruch, bei dem jedes Register (141a...d; 142a...d; 143a...d), das in den Registergruppen (REG) enthalten ist, seine eigene Ausgabe als seine Eingabe in einem Zustand selektiert, wenn das Register durch einen Selektor (144a, 144b, 144c, 144d) nicht mit einer Arithmetik- und Logikeinheit (13a, 13b, 13c) verbunden ist.

5. Rekonfigurierbarer Prozessor nach irgendeinem vorhergehenden Anspruch, bei dem die Länge jedes Registers (141a...d; 142a..,d; 193a...d), das in den Registergruppen (REG) enthalten ist, der Länge von Daten entspricht, die jeder von der Vielzahl von Arithmetik- und Logikeinheiten (13a, 13b, 13c) eingegeben werden, die mit den Registergruppen verbunden sind.

6. Halbleitervorrichtung mit einer Arithmetik- und Logikeinheitsgruppe (10), die eine Vielzahl von Arithmetik- und Logikeinheiten (13a, 13b, 13c) enthält, und einem Sequenzer (20) zum Steuern der Operation der Arithmetik- und Logikeinheitsgruppe, wobei der Operationszustand der Arithmetik- und Logikeinheitsgruppe durch den Sequenzer rekonfigurierbar ist, welche Vorrichtung ferner umfasst:
Registergruppen (REG), die zwischen Eingangsports der Vielzahl von Arithmetik- und Logikeinheiten (13a, 13b, 13c) und einer vorhergehenden Stufe angeordnet sind, von welcher der Vielzahl von Arithmetik- und Logikeinheiten Daten eingegeben werden, wobei jede Registergruppe (REG) eine Vielzahl von Registern (141a, 142a, 143a) zum Speichern der Daten enthält, die von der vorhergehenden Stufe der Vielzahl von Arithmetik- und Logikeinheiten eingegeben werden; und
Selektoren (144a, 144b, 144c, 144d) zum Selektieren von Registern, die mit der Vielzahl von Arithmetik- und Logikeinheiten (13a, 13b, 13c) zu verbinden sind, von den Registergruppen (REG) gemäß Instruktionen von dem Sequenzer (20) und zum Verbinden der selektierten Register mit den Eingangsports der Vielzahl von Arithmetik- und Logikeinheiten; bei dem:
ein Register (Fenster 1, 141a), das in einer Registergruppe (REG) enthalten ist, anderen Registern (141b, 141c, 141d) zugeordnet ist, die in anderen Registergruppen innerhalb einer vorbestimmten größeren Gruppe enthalten sind und die gleichzeitig mit dem Register selektiert werden, das in der Registergruppe enthalten ist, und gemeinsam mit den selektierten anderen Registern, die in den anderen Registergruppen innerhalb der vorbestimmten größeren Gruppe enthalten sind, einen Satz bildet; und
die Selektoren (144a, 144b, 144c, 144d), die mit den Registergruppen innerhalb der vorbestimmten größeren Gruppe verbunden sind, die Register, die den Satz bilden, gemäß Instruktionen von dem Sequenzer (20) selektieren; **dadurch gekennzeichnet, dass**
die Register (141a, 141b, 141c, 141d), die in dem Satz enthalten sind, seriell verbindbar sind; und
die Register, die in dem Satz enthalten sind, mit der vorhergehenden Stufe in einem Zustand verbunden sind, wenn die Register durch die Selektoren (144a, 144b, 144c, 144d) auch mit den Arithmetik- und Logikeinheiten (13a, 13b, 13c) verbunden sind, und in einem Zustand, wenn die Register durch die Selektoren nicht mit den Arithmetik- und Logikeinheiten verbunden sind, seriell miteinander verbunden sind.

## Revendications

1. Processeur reconfigurable comprenant un groupe d'unités logiques et arithmétiques (10) comprenant une pluralité d'unités logiques et arithmétiques (13a, 13b, 13c), et un séquenceur (20) pour commander le fonctionnement du groupe d'unités logiques et arithmétiques, le processeur comprenant par ailleurs:
des groupes de registres (REG) positionnés entre des ports d'entrée de la pluralité d'unités logiques et arithmétiques (13a, 13b, 13c) et un stade précédent à partir duquel des données sont entrées dans la pluralité d'unités logiques et arithmétiques, chaque groupe de registres comprenant une pluralité de registres (141a, 142a, 143a ; ..., 141d, 142d, 143d) pour stocker les données entrées à partir du stade précédent dans la pluralité d'unités logiques et arithmétiques (13a, 13b, 13c) ; et
des sélecteurs (144a, 144b, 144c, 144d) pour sélectionner des registres qui doivent être connectés à la pluralité d'unités logiques et arithmétiques (13a, 13b, 13c) à partir des groupes de registres (REG) en accord avec des instructions en provenance du séquenceur (20), et pour connecter les registres sélectionnés aux ports d'entrée de la pluralité d'unités logiques et arithmétiques ; dans lequel:
un registre (fenêtre 1, 141a) inclus dans un groupe de registres (REG) est associé à d'autres registres (141b, 141c, 141d) qui sont inclus dans d'autres groupes de registres à l'intérieur d'un groupe plus large prédéterminé et qui sont sélectionnés en même temps que le registre inclus dans le groupe de registres, et il forme un ensemble conjointement avec les autres registres sélectionnés qui sont inclus dans les autres groupes de registres à l'intérieur du groupe plus large prédéterminé ; et
les sélecteurs (144a, 144b, 144c, 144d) qui sont connectés aux groupes de registres à l'intérieur du groupe plus large prédéterminé sélectionnent les registres qui forment l'ensemble en accord avec des instructions en provenance du séquenceur (20) ; **caractérisé en ce que**:
les registres (141a, 141b, 141c, 141d) qui sont inclus dans l'ensemble, peuvent être connectés en série ; et
les registres qui sont inclus dans l'ensemble sont connectés au stade précédent dans un état où les registres sont également connectés aux unités logiques et arithmétiques (13a, 13b, 13c) par les sélecteurs (144a, 144b, 144c, 144d), et ils sont connectés en série les uns aux autres dans un état où les registres ne sont pas connectés aux unités logiques et arithmétiques.

2. Processeur reconfigurable (1) selon la revendication 1, dans lequel :
des registres (141a, ..., 141d ; 142a, ..., 142d ; 143a, ..., 143d) qui doivent être sélectionnés à partir du groupe de registres (REG), sont déterminés au préalable en accord avec des informations de paramétrage dans lesquelles un état du groupe d'unités logiques et arithmétiques (10) pour exécuter une application quelconque est décrit ; et
les sélecteurs (144a, 144b, 144c, 144d) sélectionnent les registres en fonction de la commutation d'un état du groupe d'unités logiques et arithmétiques (10) défini par le séquenceur (20).

3. Processeur reconfigurable selon la revendication 1 ou 2, dans lequel :
le groupe plus large prédéterminé comprend la totalité des groupes de registres (REG), de sorte que l'ensemble comprend des registres sélectionnés à partir de la totalité des groupes de registres ; et
tous les sélecteurs (144a, 144b, 144c, 144d) sélectionnent les registres qui forment l'ensemble en accord avec des instructions en provenance du séquenceur (20).

4. Processeur reconfigurable selon l'une quelconque des revendications précédentes, dans lequel chaque registre (141a, ... , 141d ; 142a, ..., 142d ; 143a, ... 143d) inclus dans les groupes de registres (REG) sélectionne une sortie délivrée par lui en tant que son entrée dans un état où le registre n'est pas connecté à une unité logique et arithmétique (13a, 13b, 13c) par un sélecteur (144a, 144b, 144c, 144d).

5. Processeur reconfigurable selon l'une quelconque des revendications précédentes, dans lequel la longueur de chaque registre (141a, ..., 141d ; 142a, ..., 142d ; 143a, ..., 143d) inclus dans les groupes de registres (REG) correspond à la longueur de données entrées dans chacune de la pluralité d'unités logiques et arithmétiques (13a, 13b, 13c) qui sont connectées aux groupes de registres.

6. Dispositif semi-conducteur comprenant un groupe d'unités logiques et arithmétiques (10) comprenant une pluralité d'unités logiques et arithmétiques (13a, 13b, 13c), et un séquenceur (20) pour commander le fonctionnement du groupe d'unités logiques et arithmétiques, l'état de fonctionnement du groupe d'unités logiques et arithmétiques étant reconfigurable par le séquenceur, le dispositif comprenant par ailleurs:
des groupes de registres (REG) positionnés entre des ports d'entrée de la pluralité d'unités logiques et arithmétiques (13a, 13b, 13c) et un stade précédent à partir duquel des données sont entrées dans la pluralité d'unités logiques et arithmétiques, chaque groupe de registres comprenant (REG) une pluralité de registres (141a, 142a, 143a) pour stocker les données entrées à partir du stade précédent dans la pluralité d'unités logiques et arithmétiques ; et
des sélecteurs (144a, 144b, 144c, 144d) pour sélectionner des registres qui doivent être connectés à la pluralité d'unités logiques et arithmétiques (13a, 13b, 13c) à partir des groupes de registres (REG) en accord avec des instructions en provenance du séquenceur (20), et pour connecter les registres sélectionnés aux ports d'entrée de la pluralité d'unités logiques et arithmétiques ; dans lequel :
un registre (fenêtre 1, 141a) inclus dans un groupe de registres (REG) est associé à d'autres registres (141b, 141c, 141d) qui sont inclus dans d'autres groupes de registres à l'intérieur d'un groupe plus large prédéterminé, et qui sont sélectionnés en même temps que le registre inclus dans le groupe de registres, et il forme un ensemble conjointement avec les autres registres sélectionnés qui sont inclus dans les autres groupes de registres à l'intérieur du groupe plus large prédéterminé ; et
les sélecteurs (144a, 144b, 144c, 144d) qui sont connectés aux groupes de registres à l'intérieur du groupe plus large prédéterminé sélectionnent les registres qui forment l'ensemble en accord avec des instructions en provenance du séquenceur (20) ; **caractérisé en ce que** :
les registres (141a, 141b, 141c, 141d) qui sont inclus dans l'ensemble, peuvent être connectés en série ; et
les registres qui sont inclus dans l'ensemble sont connectés au stade précédent dans un état où les registres sont également connectés aux unités logiques et arithmétiques (13a, 13b, 13c) par les sélecteurs (144a, 144b, 144c, 144d), et ils sont connectés en série les uns aux autres dans un état où les registres ne sont pas connectés aux unités logiques et arithmétiques.
